Europäisches Patentamt

European Patent Office

Office européen des brevets

(19)

(11) EP 1 612 788 A2

(12) # EUROPEAN PATENT APPLICATION

(43) Date of publication:
04.01.2006 Bulletin 2006/01

(51) Int Cl.:
*G11B 19/02* (2006.01)

(21) Application number: 05253999.6

(22) Date of filing: 28.06.2005

(84) Designated Contracting States:
AT BE BG CH CY CZ DE DK EE ES FI FR GB GR
HU IE IS IT LI LT LU MC NL PL PT RO SE SI SK TR
Designated Extension States:
AL BA HR LV MK YU

(30) Priority: 29.06.2004 KR 2004049640

(71) Applicant: Samsung Electronics Co, Ltd
Suwon-si, Gyeonggi-do (KR)

(72) Inventor: Cho, Byung-hyuk
Yeongtong-gu, Suwon-si, Gyeonggi-do (KR)

(74) Representative: Robinson, Ian Michael et al
Appleyard Lees,
15 Clare Road
Halifax HX1 2HY (GB)

(54) **Adaptive recording method in combination system**

(57) Provided is an adaptive recording method by which recording can be performed adaptively according to the remaining space of a target medium and the amount of data to be recorded, in a combination system including two different playing/recording apparatuses, one of which is a source and the other of which is the target medium. The method includes a user designating a play section of the optical disc, calculating a play time of the designated play section, calculating a remaining time of the magnetic tape on which the play section is to be recorded, using a ratio between angular velocities of a driving shaft and a driven shaft, determining a recording speed using the calculated play time of the optical disc and the calculated remaining time of the magnetic tape, and recording the played video data of the optical disc on the magnetic tape according to the determined recording speed.

FIG. 2

EP 1 612 788 A2

**Description**

The present invention relates to a combination system, and more particularly, to an adaptive recording method by which recording can be performed adaptively according to the remaining space of a target medium and the amount of data to be recorded, in a combination system including two different playing/recording apparatuses, one of which is a source medium and the other of which is the target medium.

A system which combines at least two different devices into one system is referred to as a "combination system", a "combo system", or simply a "combo". A representative example of a combo system is a DVDP/VCR combo system designed to perform functions of a digital versatile disc player (DVDP) and a video cassette recorder (VCR).

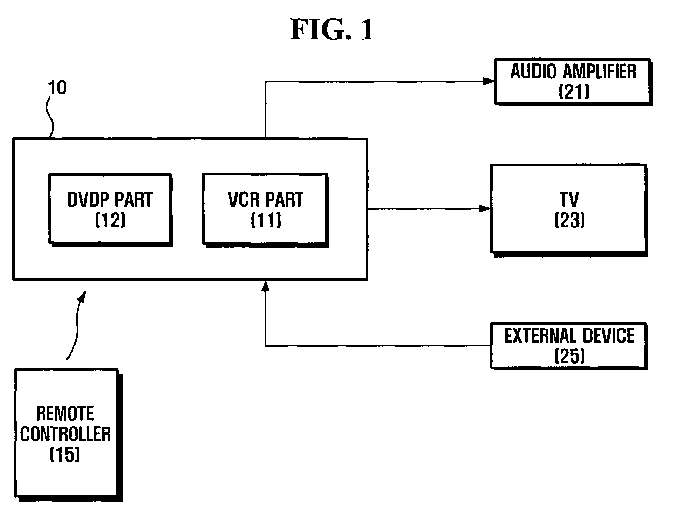

Figure 1 is a schematic block diagram of a conventional DVDP/VCR combo system and peripheral devices connected thereto. A DVDP/VCR combo system 10 includes a VCR part 11 and a DVDP part 12. The VCR part 11 performs general VCR functions, including a function which plays video or audio signals recorded on a magnetic tape and a function which records signals input from external sources on the magnetic tape. The DVDP part 12 performs general DVDP functions, including a function which plays video or audio signals recorded on a digital versatile disc (DVD). In addition to their independent functions of the VCR part 11 and the DVDP part 12, the DVDP/VCR combo system 10 performs composite functions capable of recording video or audio signals played by the DVDP part 12 on the magnetic tape using the VCR part 11.

A television (TV) 23, a plasma display panel (PDP), or a liquid crystal display (LCD) monitor is connected to the DVDP/VCR combo system 10 as a peripheral device to output video and/or audio data played by the DVDP part 12 or the VCR part 11. An audio amplifier 21 is connected to the DVDP/VCR combo system 10 as a peripheral device that outputs audio signals played by the DVDP part 12. In addition, an external device 25 such as a camcorder can also be connected to the DVDP/VCR combo system 10. The DVDP/VCR combo system 10 records and/or plays video and/or audio data input from the external device 25.

The VCR part 11 and the DVDP part 12 in the DVDP/VCR combo system 10 appear as one system. A user manipulates a separate input device such as a remote controller 15 or an operation panel (not shown) provided on a front of the DVDP/VCR combo system 10, so as to switch modes between the VCR part 11 and the DVD part 12, and operate the individual functions of the VCR part 11 and the DVD part 12.

By using such a DVDP/VCR combo system, played DVD video data can be recorded on a magnetic tape by a VCR and played VCR video data can be recorded on a recordable DVD. However, it is difficult for a user to know the remaining space of a DVD or a magnetic tape (hereinafter, referred to as a target medium) on which data is to be recorded and to determine whether there is enough room to record source video data recorded on the target medium.

U.S. Patent Application Publication No. 2002-172496 discloses a digital recording/playing apparatus that calculates the remaining space left on a recording medium while recording video data, to inform a user of the operation state and possibility of video recording. However, the digital recording/playing apparatus shows a user the remaining space left on a recording medium and the possibility of recording, but does not provide a proper recording method to allow adaptive recording according to the amount of source video to be recorded and the remaining space of a target medium.

According to the present invention there is provided an apparatus and method as set forth in the appended claims. Preferred features of the invention will be apparent from the dependent claims, and the description which follows.

An aspect of the present invention provides a method of adaptively recording played source video data on a target medium by dynamically changing a recording mode during playing/recording between two different playing apparatuses in a combo system.

An aspect of the present invention also provides a method for calculating the amount of remaining recording time of a storage medium.

According to an aspect of the present invention, there is provided a method of recording played video data of an optical disc adaptively according to a remaining recordable space of a magnetic tape in a combo system including at least one apparatus to play/record the optical disc and at least one apparatus to play/record the magnetic tape. The method includes user designating a play section of the optical disc, calculating a play time of the designated play section, calculating a remaining time of the magnetic tape on which the play section is to be recorded using a ratio between angular velocities of a driving shaft and a driven shaft, determining a recording speed using the calculated play time of the optical disc and the calculated remaining time of the magnetic tape, and recording the played video data of the optical disc on the magnetic tape according to the determined recording speed.

If a user does not designate the play section but only issues a recording command, the entire optical disc may be designated as the play section, and if the user designates a scene of the optical disc and then issues a recording command, a section of the optical disc corresponding to the designated scene may be designated as the play section.

The remaining time may be calculated by measuring the angular velocity of the driving shaft, the angular velocity of the driven shaft, and the recording speed.

The remaining time may be given by:

$$\text{Remaining time} = \text{Total time} \times \frac{r_1^2 - r_0^2}{r_1^2 + r_2^2 - 2r_0^2},$$

where $r_0$ represents the radius of the driving shaft or the driven shaft, $r_1$ represents the value calculated by dividing the recording speed by the angular velocity of the driving shaft, $r_2$ represents is the value calculated by dividing the recording speed by the angular velocity of the driven shaft, and the total time indicates a total recording time of the magnetic tape based on the recording speed.

Here, the recording speed may be determined by a recording mode having the highest recording speed among recording modes in which the play section of the optical disc can be recorded adaptively.

In another aspect of the present invention, there is provided a method of recording played video data of a magnetic tape on an optical disc adaptively according to a remaining recordable space of an optical disc in a combination system including at least one apparatus to play/record the optical disc and at least one apparatus to play/record the magnetic tape, the method including a user designating a play section of the magnetic tape, calculating a play time of the designated play section, calculating a remaining time of the optical disc on which the designated play section is to be recorded, using the remaining recordable space of the optical disc and a current bit rate, determining a compression rate of video data to be recorded, using the calculated play time of the magnetic tape and the calculated remaining time of the optical disc, and recording the played video data of the magnetic tape on the optical disc according to the determined compression rate.

If a user does not designate the play section but only issues a recording command, the entire magnetic tape may be designated as the play section.

The compression rate may be determined such that the calculated play time of the magnetic tape is smaller than or equal to the calculated remaining time of the optical disc.

The remaining time may be calculated by measuring an angular velocity of a driving shaft, an angular velocity of a driven shaft, and a recording speed.

After the determining of the compression rate and before the recording of the played video data, there may further be included rewinding of the magnetic tape from the start point.

Additional aspects and/or advantages of the invention will be set forth in part in the description which follows and, in part, will be apparent from the description, or may be learned by practice of the invention.

These and/or other aspects and advantages of the invention will become apparent and more readily appreciated from the following description of the embodiments, taken in conjunction with the accompanying drawings of which:

Figure 1 is a schematic block diagram of a conventional combo system and peripheral devices connected thereto;

Figure 2 illustrates in detail a combo system according to an embodiment of the present invention;

Figure 3 is a flowchart illustrating a method of operation of a combo system according to a first embodiment of the present invention;

Figure 4 is a view for explaining a method of calculating a remaining recording time of a tape;

Figure 5 is a flowchart illustrating a method of operation of a combo system according to a second embodiment of the present invention;

Figure 6 illustrates a structure of a recordable DVD; and

Figure 7 illustrates various areas of the recordable DVD represented in a line.

Reference will now be made in detail to the embodiments of the present invention, examples of which are illustrated in the accompanying drawings, wherein like reference numerals refer to the like elements throughout. The embodiments are described below to explain the present invention by referring to the figures.

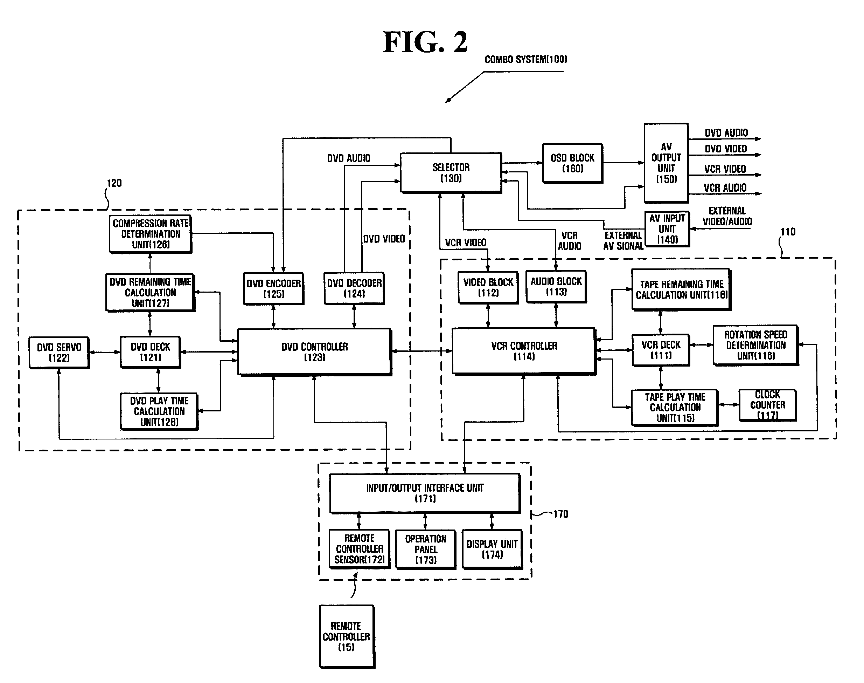

Figure 2 illustrates in detail a combo system according to an embodiment of the present invention, and more particularly, a combo system 100 that can perform functions of a DVDP and a VCR. The combo system 100 includes a VCR unit 110 that performs general VCR functions, a DVDP unit 120 that performs general DVDP functions, a selector 130 that performs selection with respect to signals output from the VCR unit 110 and the DVDP unit 120, an audio/video (AV) input unit 140 that provides signals output from an external device such as a camcorder to the selector 130, an AV output unit 150 that provides signals output from the VCR unit 110 and the DVDP unit 120 to a peripheral device such as a TV or an amplifier, an on screen display (OSD) block 160 that adds an OSD function to video signals output from the VCR unit 110 and the DVDP unit 120, and a user input/output unit 170 that receives a command from a user and displays a command execution process and a current system operation.

The VCR unit 110 includes a VCR deck 111 that records a signal on a magnetic tape or plays a signal recorded on a magnetic tape and records an AV signal received from the DVDP unit 120 or the AV input unit 140 on a magnetic tape, a video block 112 that transmits and receives a video signal played or recorded by the VCR deck 111, an audio block 113 that transmits and receives an audio signal played or recorded by the VCR deck 111, a VCR controller 114 that controls the overall operation of other components of the VCR unit 110, a tape play time calculation unit 115 that calculates a play time of a section a user desires to record, a clock counter 117 that provides a current time of the combo system 100, a tape remaining time calculation unit 118 that calculates a remaining recording time of a magnetic tape, and a rotation speed determination unit 116 that changes the rotation speed of a magnetic tape at the VCR deck 111 according to a command from the VCR controller 114.

The DVDP unit 120 includes a DVD deck 121, a DVD servo 122, a DVD controller 123, a DVD decoder 124, a DVD encoder 125, a compression rate determination unit 126, a DVD remaining time calculation unit 127, and a DVD play time calculation unit 128. The DVD deck 121 reads data recorded on a DVD to play the DVD and records an AV signal input from the VCR unit 110 or the AV input unit 140 on the DVD according to a recording command from the DVD controller 123. The DVD servo 122 controls the position and speed of the DVD deck 121. The DVD controller 123 controls the overall operation of other components of the DVDP unit 120.

The DVD decoder 124 receives data read by the DVD deck 121 through the DVD controller 123 and outputs DVD video data and DVD audio data, and the DVD encoder 125 encodes an external signal output through the selector 130 using a predetermined codec, e.g., an MPEC-2 codec, according to a compression rate determined by the compression rate determination unit 126.

The DVD remaining time calculation unit 127 calculates a remaining recording time of a current DVD and transmits the calculated remaining recording time to the compression rate determination unit 125. The compression rate determination unit 126 determines a compression rate based on the remaining recording time of the current DVD and a play time of streams to be recorded on the DVD and provides the determined compression rate to the DVD encoder 125. The DVD play time calculation unit 128 calculates a play time of a section of data that a user desires to record.

The user input/output unit 170 includes a display unit 174, an operation panel 173, a remote controller sensor 172, and an input/output interface 171. The display unit 174 displays the state of the combo system 100, such as an operation, a control, and a setting mode, to let a user know the state of the combo system 100. The operation panel 173 receives various operation commands from the user. The remote controller sensor 172 receives an operation command from the user through the remote controller 15. The input/output interface 171 interfaces connections among the VCR controller 114, the DVD controller 123, the display unit 174, the manipulation unit 173, and the remote controller sensor 172.

The DVD controller 123 transmits the operation state of the DVDP unit 120 to the VCR controller 114 and the VCR controller 114 transmits the operation state of the VCR unit 110 to the DVD controller 123. In this embodiment, the VCR controller 114 and the DVD controller 123 are separate. However, the present invention is not limited to such a configuration and a main controller incorporating the functions of the DVD controller 123 and the VCR controller 114 may be included.

The output of the DVD decoder 124, the output of the video block 112, the output of the audio block 113, and an external AV signal from the AV input unit 140 are input to the selector 130. The selector 130 performs selection with respect to signals that are input under the control of the VCR controller 114 and the DVD controller, and the output of the selector 130 is input into the OSD block 160 and the AV output unit 150. The OSD block 160 overlays an OSD over a signal input from the selector 130.

The output unit 150 receives signals from the DVD decoder 124, the selector 130, and the OSD block 160 and outputs signals related to DVD video data, DVD audio data, VCR video data, or VCR audio data. The peripheral device such as a TV or an audio instrument is connected to the AV output unit 150 and thus outputs video or audio data. The AV input unit 140 is connected to the selector 130 and transmits an externally input signal to the selector 130. A signal output terminal of an external device such as a camcorder is connected to the AV input unit 140. Thus, a signal recorded in the external device can be transmitted to the combo system 100 through the AV input unit 140.

Two embodiments of the present invention are now presented; one in which a DVD is a source and a magnetic tape is a target medium and another in which a magnetic tape is a source and a DVD is a target medium.

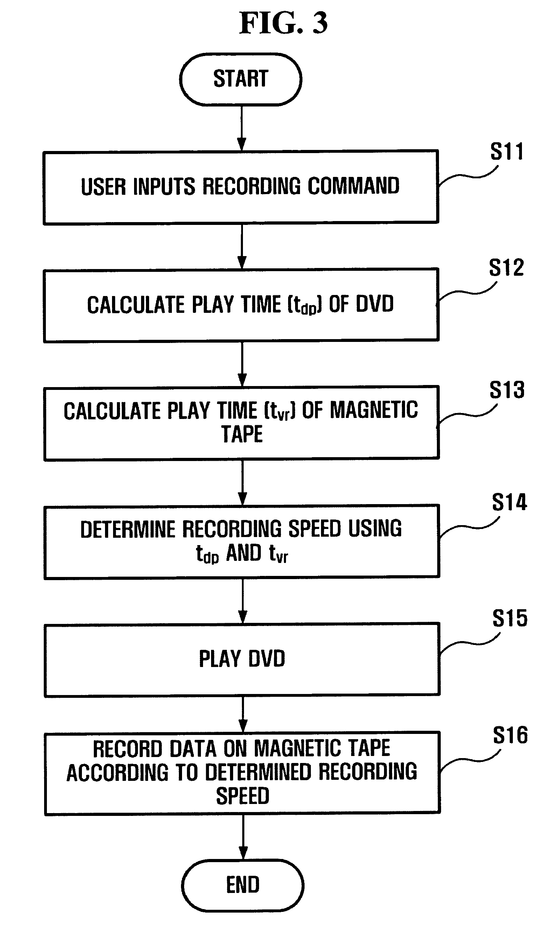

Figure 3 is a flowchart illustrating a method of operation of a combo system according to a first embodiment of the present invention. First, a user issues a recording command to the DVD controller 123 using the remote controller 15 or the operation panel 173 in operation S11. The user can designate the entire DVD or a unit of it as a section to be played (the range of source video data to be recorded on a target medium). When the entire DVD is designated as the play section, the user only needs to issue a recording command without a separate designation. As such, the user may issue a recording command to record the entire DVD (the former case) or to record a scene designated from the DVD (the latter case).

Next, the DVD play time calculation unit 128 calculates a DVD play time ($t_{dp}$) in operation S12. In the former case the DVD play time calculation unit 128 calculates a play time of the entire DVD and sets $t_{dp}$ to the calculated play time. In the latter case the DVD play time calculation unit 128 calculates a play time of a scene designated by the user and sets $t_{dp}$ to the calculated play time. Since streams are stored in a DVD along with additional information such as a play time of the streams, it is easy to recognize the play time of the entire DVD or a designated scene by reading the additional information. In a DVD, to facilitate searching of the DVD, each title is segmented into a plurality of scenes, the plurality of scenes is recorded, and a play time of each scene is separately stored.

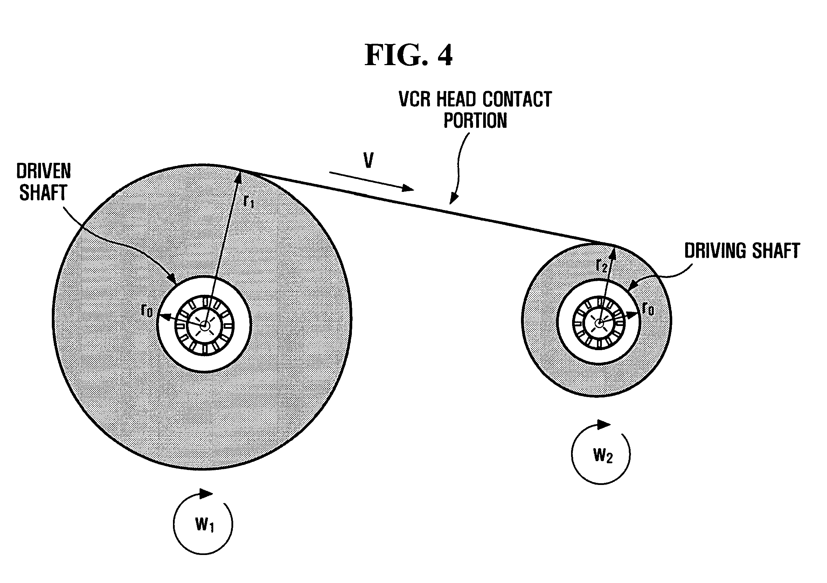

Next, the tape remaining time calculation unit 118 of the VCR unit 110 calculates a remaining time ($t_{vr}$) of a magnetic tape in operation S13. A method of calculating the remaining time of the magnetic tape will be described in detail with reference to Figure 4. There are two shafts, i.e., a driving shaft and a driven shaft. Once the driving shaft rotates, the driven shaft rotates at the same tangential velocity $V$ (hereinafter referred to as a recording speed) as the driving shaft. Here, the driving shaft and the driven shaft have the same radius $r_0$. A magnetic tape is rolled around the driven shaft to a thickness of $r_1$ - $r_0$ and around the driving shaft to a thickness of $r_2$ - $r_0$. Assuming an angular velocity of the driving shaft is $w_2$, an angular velocity of the driven shaft is $w_1$, and a linear velocity at which the magnetic tape passes a VCR head is $V$, $w_1$, $w_2$, and $V$ can be measured by the VCR deck 111.

In this case, on the assumption that the magnetic tape does not shrink or expand, the following equation is satisfied.

$$r_1 \times w_1 = r_2 \times w_2 = V \qquad (1)$$

Thus, $r_1 = V/w_1$ and $r_2 = V/w_2$. Here, on the assumption that a play time of the magnetic tape is proportional to the length of the magnetic tape and the magnetic tape has a constant thickness, a ratio between the two shaded areas in Figure 4 is equal to a ratio between the entire recordable space and a remaining recordable space of the magnetic tape. In other words, a remaining recording time of the magnetic tape satisfies the following equation. In the following equation, a total time indicates a total recording time of the magnetic tape based on a current recording speed. For example, when the current recording speed is a standard play (SP) speed, data can be recorded on a T-90 magnetic tape for a total of 90 minutes.

$$\text{Remaining time} = \text{Total time} \times \frac{r_1^2 - r_0^2}{r_1^2 + r_2^2 - 2r_0^2} \qquad (2)$$

Next, the rotation speed determination unit 116 determines a rotation speed of the driving shaft using the calculated DVD play time ($t_{dp}$) and the calculated remaining time ($t_{vr}$) of the magnetic tape, in operation S14. If $t_{dp}$ is smaller than or equal to $t_{vr}$, the rotation speed determination unit 116 maintains the rotation speed of the driving shaft according to the SP speed. If $t_{dp}$ is greater than $t_{vr}$, recording cannot be completed, and thus the rotation speed of the driving shaft is reduced to record more data per unit length of the magnetic tape.

In general, the VTR unit 110 has recording modes that determine a recording speed and are classified into an SP mode, a long play (LP) mode, and a super long play (SLP) mode. Original VTRs only used the SP mode, but the LP and SLP modes were introduced to record more data per unit length of a tape by increasing a signal recording density. When a magnetic tape on which recording is performed in the LP or SLP mode is played, the VTR unit 110 automatically recognizes the LP or SLP mode and plays the magnetic tape. Thus, there is no need to separately manipulate a VTR button. If the rotation speed of the driving shaft is 1 in the SP mode, the rotation speed of the driving shaft is 1/2 in the LP mode and 1/3 in the SLP mode. Thus, the LP mode has a playing or recording time that is 2 times the SP mode and the SLP mode has a playing or recording time that is 3 times the SP mode. However, since degradation of image quality is inevitable as a play time increases, it is desirable to perform recording in as rapid a play mode as possible.

Thus, based on the SP mode, when $t_{dp}$ is greater than $t_{vr}$, the two values are compared in the LP mode. As a result of the comparison, if $t_{dp}$ is greater than $t_{vr}$ in the LP mode, the two values are compared in the SLP mode. If $t_{dp}$ is greater than $t_{vr}$ in the SLP mode, the VCR controller 114 informs a user that recording cannot be performed adaptively through the display unit 174.

In the above description, the three playing/recording speeds, i.e., the SP mode, the LP mode, and the SLP mode, are taken as an example of industrial standards, and it is obvious to those skilled in the art that various modes having various playing/recording speeds can be set according to industrial standards adopted. Next, the DVD controller 123 controls the DVD deck 121 to play a DVD in operation S15. Played video data/audio data are decoded by the DVD decoder 124 and then transmitted to the selector 130. The video data/audio data transmitted to the selector 130 are input to the VCR controller 114 through the video block 112 and the audio block 113. The VCR controller 114 provides input DVD AV data to the VCR deck 111 and the VCR deck 111 records the DVD AV data on the magnetic tape at the determined rotation speed of the driving shaft in operation S16.

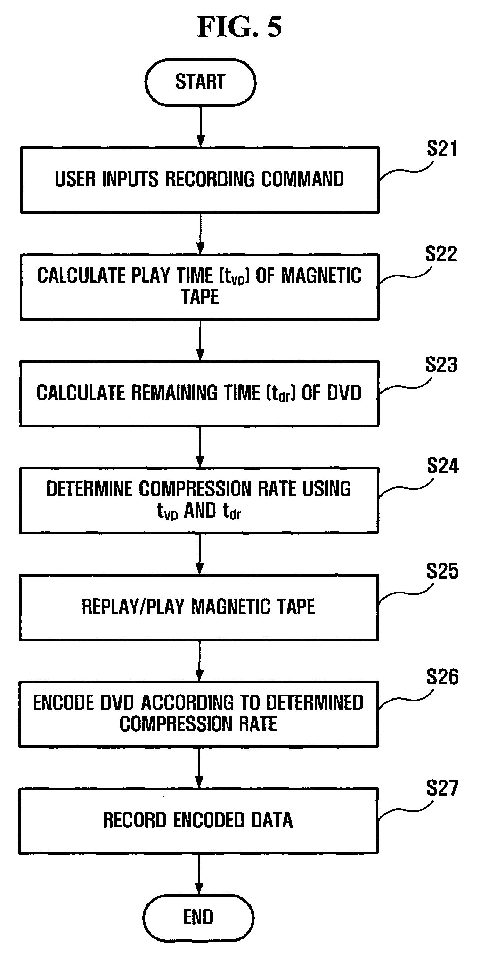

Figure 5 is a flowchart illustrating a method of operation of a combo system according to a second embodiment of the present invention. First, a user issues a recording command to the VCR controller 114 using the remote controller 15 or the operation panel 173 in operation S21. The recording command may be one for recording a play section from a current point to the end of a magnetic tape (the former case) or a specific play section from a start point designated by the user to an end point designated by the user (the latter case). In the former case, recording can be performed by simply pressing a recording button. In the latter case, the user can determine the specific play section by selecting a specific point as a start point and a different specific point as an end point while watching streams. In the latter case, the start and end points designated by the user are expressed as times and stored by the clock counter 117.

Next, the tape play time calculation unit 115 calculates a play time ($t_{vp}$) of a magnetic tape in operation S22. In the former case the tape play time calculation unit 115 calculates a play time from a current point to the end of the magnetic tape, i.e., a remaining time, using Equation 2 and sets $t_{vp}$ to the calculated play time. In the latter case the tape play time calculation unit 115 sets $t_{vp}$ to a difference between counts of the start point and the end point that are designated by the user.

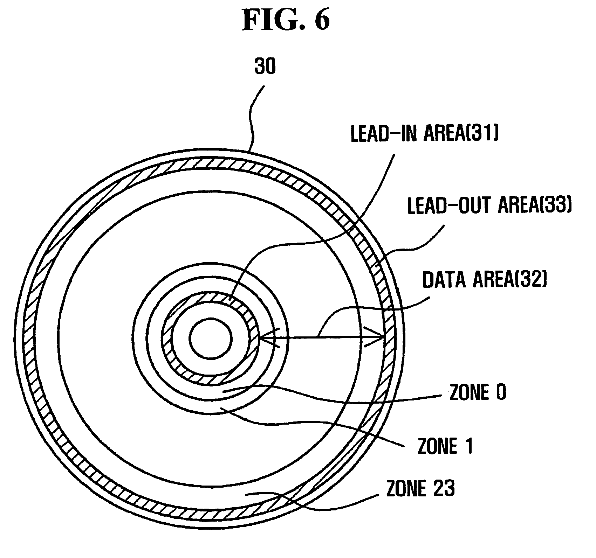

Next, the DVD remaining time calculation unit 127 of the DVDP unit 120 calculates a remaining time ($t_{dr}$) of a DVD in operation S23. The structure of a recordable DVD 30 (DVD r/w) is as shown in Figure 6. As shown in Figure 6, the recordable DVD 30 includes a lead-in area 31 at an inner circumference area, a lead-out area 33 at an outer circumference area, and a data area 32 between the lead-in area 31 and the lead-out area 33. A reference signal for stabilizing the DVD servo 122 during access by an optical pickup and an ID signal for identifying the recordable DVD 30 among different types of media are recorded in the lead-in area 31. The same reference signal is also recorded in the lead-out area 33.

Figure 6 illustrates a plurality of zones, each being formed in the shape of a concentric circle, in the recordable DVD 30. In this example, the recordable DVD 30 is divided into 24 zones indicated by zones 0 - 23. The angular velocity of the recordable DVD 30 is set different in each of the zones 0 - 23 to increase near the inner circumference area and is kept constant during access by an optical pickup in the same zone.

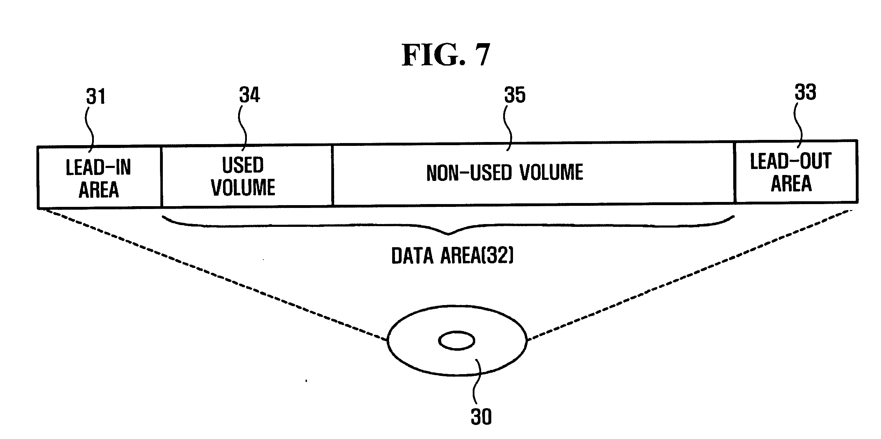

Figure 7 illustrates various areas of the recordable DVD 30 represented in a line. The data area 32 comprises the entire recording area of the DVD 30 except for the lead-in area 31 and the lead-out area 33. The data area 32 is divided into a used volume 34 and a non-used volume 35.

The DVD remaining time calculation unit 127 measures the size of the non-used volume 35 and calculates a time (hereinafter referred to as a remaining time) for which data can be recorded in the non-used volume 35 according to a current bit rate when data is compressed using a predetermined codec (e.g., MPEG-2) according to a DVD standard compression rate. For example, when the size of the non-used volume 35 is M bytes and the current bit rate is B bytes/sec, the remaining time is M/B seconds.

Next, the compression rate determination unit 126 determines a compression rate used for the DVD encoder 125 to encode data, using the calculated magnetic tape play time ($t_{vp}$) and DVD remaining time ($t_{dr}$) in operation S24. The compression rate determination unit 126 maintains a current standard compression rate if $t_{vp}$ is smaller than $t_{dr}$. If $t_{vp}$ is greater than $t_{dr}$, recording cannot be completed. By increasing the compression rate, $t_{vp}$ is made smaller than or equal to $t_{dr}$.

A method for increasing a compression rate may be implemented using various methods such as a method for reducing a frame rate of an image, a method for reducing a signal-to-noise ratio (SNR), or a method for reducing a resolution of an image.

Next, the VCR controller 114 controls the VCR deck 111 to play the magnetic tape in operation S25. In the latter case in the description of operation S21, even when a user presses a recording button at the end of the magnetic tape, the VCR deck 111 rewinds the magnetic tape to cause the clock counter 117 to indicate the start point and then plays the magnetic tape. Played VCR video or audio data are then transmitted to the selector 130 through the video block 112 and the audio block 113 and then transmitted to the DVD encoder 125.

The DVD encoder 125 encodes the transmitted VCR video or audio data at the determined compression rate and provides the encoded VCR video or audio data to the DVD deck 121 in operation S26. The DVD deck 121 records the encoded VCR video or audio data in the non-used volume 35 of the data area 32 of the DVD 30 in operation S27.

According to the present invention, a user can perform proper recording between different playing apparatuses without checking a play time of streams to be recorded and a remaining space of a recording medium.

Also, according to the present invention, a remaining space of a partially used recording medium can be efficiently used without being wasted.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of recording played video data of an optical disc adaptively according to a remaining recordable space of a magnetic tape in a combination system including at least one apparatus to play/record the optical disc and at least one apparatus to play/record the magnetic tape, the method comprising:

   (a) a user designating a play section of the optical disc;
   (b) calculating a play time of the designated play section;
   (c) calculating a remaining time of the magnetic tape on which the play section is to be recorded, using a ratio between angular velocities of a driving shaft and a driven shaft;
   (d) determining a recording speed using the calculated play time of the optical disc and the calculated remaining time of the magnetic tape; and
   (e) recording the played video data of the optical disc on the magnetic tape according to the determined recording speed.

2. The method of claim 1, wherein if a user does not designate the play section but only issues a recording command, the entire optical disc is designated as the play section, and if the user designates a scene of the optical disc and then issues a recording command, a section of the optical disc corresponding to the designated scene is designated as the play section.

3. The method of claim 1 or 2, wherein the remaining time is calculated by measuring the angular velocity of the driving shaft, the angular velocity of the driven shaft, and the recording speed.

4. The method of claim 3, wherein the remaining time is given by

$$\text{Remaining time} = \text{Total time} \times \frac{r_1^2 - r_0^2}{r_1^2 + r_2^2 - 2r_0^2},$$

where $r_0$ represents the radius of the driving shaft or the driven shaft, $r_1$, represents the value calculated by dividing the recording speed by the angular velocity of the driving shaft, $r_2$ represents the value calculated by dividing the recording speed by the angular velocity of the driven shaft, and the total time indicates a total recording time of the magnetic tape based on the recording speed.

5. The method of any preceding claim, wherein the recording speed is determined by a recording mode having the highest recording speed among recording modes in which the play section of the optical disc can be recorded adaptively.

6. A method of recording played video data of a magnetic tape on an optical disc adaptively according to a remaining recordable space of an optical disc in a combination system including at least one apparatus to play/record the optical disc and at least one apparatus to play/record the magnetic tape, the method comprising:

(a) a user designating a play section of the magnetic tape;
(b) calculating a play time of the designated play section;
(c) calculating a remaining time of the optical disc on which the designated play section is to be recorded, using the remaining recordable space of the optical disc and a current bit rate;
(d) determining a compression rate of video data to be recorded, using the calculated play time of the magnetic tape and the calculated remaining time of the optical disc; and
(e) recording the played video data of the magnetic tape on the optical disc according to the determined compression rate.

**7.** The method of claim 6, wherein if a user does not designate the play section but only issues a recording command, the entire magnetic tape is designated as the play section.

**8.** The method of claim 6 or 7, wherein the play time is calculated by measuring an angular velocity of a driving shaft, an angular velocity of a driven shaft, and a recording speed.

**9.** The method of claim 6, 7 or 8, wherein the compression rate is determined such that the calculated play time of the magnetic tape is smaller than or equal to the calculated remaining time of the optical disc.

**10.** The method of claim 6, 7, 8 or 9, after the determining of the compression rate and before the recording of the played video data, further comprising rewinding the magnetic tape from the start point.

**11.** A method comprising:

calculating a playtime of a selection of a first medium;
calculating a remaining recording time of a second medium;
determining an optimal recording mode based on both the playtime of the first medium and the remaining recording time of the second medium; and
recording the selection of the first medium to the second medium according to the optimal recording mode.

**12.** The method of claim 11, wherein the first medium comprises a magnetic tape and the second medium comprises an optical disk.

**13.** The method of claim 11 or 12, wherein the first medium comprises a magnetic tape and the second medium comprise an optical disk.

**14.** An apparatus comprising;
a VCR unit (110) to play/record magnetic tapes;
a DVD unit (120) to play/record digital video disks; and
a controller (123, 114) in communication with the VCR unit (110) and the DVD unit (120) to calculate a ratio of remaining play time to remaining recording time of a magnetic tape and a digital video disk.

**15.** The apparatus of claim 14, wherein the optimal recording mode comprises a highest possible recording quality.

**16.** The apparatus of claim 14 or 15, wherein the controller (123, 114) is formed by respective controllers of the VCR unit (110) and the DVD unit (120).

# FIG. 1

FIG. 2

COMBO SYSTEM(100)

# FIG. 3

START

USER INPUTS RECORDING COMMAND — S11

CALCULATE PLAY TIME ($t_{dp}$) OF DVD — S12

CALCULATE PLAY TIME ($t_{vr}$) OF MAGNETIC TAPE — S13

DETERMINE RECORDING SPEED USING $t_{dp}$ AND $t_{vr}$ — S14

PLAY DVD — S15

RECORD DATA ON MAGNETIC TAPE ACCORDING TO DETERMINED RECORDING SPEED — S16

END

# FIG. 4

VCR HEAD CONTACT PORTION

DRIVEN SHAFT

DRIVING SHAFT

V

$r_1$

$r_0$

$r_2$

$r_0$

$W_1$

$W_2$

# FIG. 5

START

| | |
|---|---|
| USER INPUTS RECORDING COMMAND | S21 |

| | |
|---|---|
| CALCULATE PLAY TIME $(t_{vp})$ OF MAGNETIC TAPE | S22 |

| | |
|---|---|
| CALCULATE REMAINING TIME $(t_{dr})$ OF DVD | S23 |

| | |
|---|---|
| DETERMINE COMPRESSION RATE USING $t_{vp}$ AND $t_{dr}$ | S24 |

| | |
|---|---|
| REPLAY/PLAY MAGNETIC TAPE | S25 |

| | |
|---|---|
| ENCODE DVD ACCORDING TO DETERMINED COMPRESSION RATE | S26 |

| | |
|---|---|
| RECORD ENCODED DATA | S27 |

END

# FIG. 6

30

LEAD-IN AREA(31)

LEAD-OUT AREA(33)

DATA AREA(32)

ZONE 0

ZONE 1

ZONE 23

# FIG. 7

| LEAD-IN AREA | USED VOLUME | NON-USED VOLUME | LEAD-OUT AREA |
|:---:|:---:|:---:|:---:|
| 31 | 34 | 35 | 33 |

DATA AREA(32)

30

EP 1 612 788 A2